(19) Europäisches Patentamt
European Patent Office
Office européen des brevets

(11) Numéro de publication: **0 229 540 A1**

(12) **DEMANDE DE BREVET EUROPEEN**

(21) Numéro de dépôt: **86402509.3**

(22) Date de dépôt: **12.11.86**

(51) Int. Cl.⁴: **G05D 23/19**, G05D 23/20, G05D 23/24

(30) Priorité: **15.11.85 FR 8516936**

(43) Date de publication de la demande: **22.07.87 Bulletin 87/30**

(84) Etats contractants désignés: **DE ES GB IT**

(71) Demandeur: **SOCIETE ELECTROMECANIQUE DE NEVERS SELNEV**
**1 à 6, rue des Grands Champs**
**F-58000 Nevers(FR)**

(72) Inventeur: **Malbec, Yves**
**THOMSON-CSF SCPI 19, avenue de Messine**
**F-75008 Paris(FR)**
Inventeur: **Enjalbert, Gérard**
**THOMSON-CSF SCPI 19, avenue de Messine**
**F-75008 Paris(FR)**

(74) Mandataire: **Phan, Chi Quy et al**
**THOMSON-CSF SCPI 19, avenue de Messine**
**F-75008 Paris(FR)**

(54) **Thermostat électronique.**

(57) Thermostat électronique, caractérisé en ce qu'il comprend un microcontrôleur (2) ayant ses propres mémoires contenant un programme d'exécution des fonctions de base de plusieurs types de thermostats à caractéristiques de fonctionnement différentes, et des fonctions de liaison entre ce microcontrôleur (2) et des organes périphériques de ce dernier tels qu'un système à sonde de saisie de température - (4), un système de commandes manuelles de fonctionnement (8) et d'affichage (12), un système d'alimentation électrique (9) de générateur thermique chaud ou froid et une mémoire de personnalisation.

FIG_1

15
Référence
6
A
V
7
Conver-tisseur
2
Micro-Contrôleur
10
Mémoire
Sonde
5
4
Affichages
12
8
Commandes
Alimentation générateur
9
3
Alimentation thermostat
1

EP 0 229 540 A1

# THERMOSTAT ELECTRONIQUE

La présente invention concerne un thermostat électronique.

Un thermostat est, d'une façon générale, un appareil ou dispositif permettant d'obtenir une température constante dans une enceinte, en interrompant un générateur ou source thermique chaude ou froide quand une limite maximale préréglée de température est atteinte, et en la rétablissant dès l'apparition d'une limite minimale préréglée de température.

Jusqu'à présent le maintien constant de la température dans des enceintes chauffées et des enceintes de réfrigération ou de congélation est assuré d'une manière plus ou moins satisfaisante, par des thermostats électromécaniques.

Cependant, si l'on veut obtenir avec ces thermostats une régulation plus élaborée de la température de ces enceintes et des fonctions supplémentaires de signalisation, d'affichage, de sécurité, etc. il est difficile de les réaliser en électromécanique.

Certains thermostats connus sont des thermostats électroniques réalisés avec des composants discrets.

La dispersion relativement importante des caractéristiques des composants discrets fabriqués en série et la difficulté d'obtenir une qualité constante dans la réalisation des circuits relativement complexes avec des composants discrets rendent les thermostats électroniques connus très coûteux à cause d'une sélection poussée des composants utilisés et de grands soins dans leur fabrication, ou les rendent peu fiables à cause des composants mals électionnés qui sont sujets à de fortes dérives.

La présente invention ayant pour but d'éviter ces inconvénients, permet de réaliser un thermostat électronique économique, précis, fiable, présentant une grande facilité de fabrication, une simplicité d'emploi, remplissant des fonctions supplémentaires à celle de maintien constante de la température, telles que signalisation, affichage, sécurité, etc. et permettant une régulation élaborée de la température d'une enceinte.

Selon l'invention, un thermostat électronique est caractérisé en ce qu'il comprend un microcontrôleur ayant ses propres mémoires morte et vive contenant un programme d'exécution des fonctions de base de plusieurs types de thermostats à caractéristiques de fonctionnement différentes et des fonctions de liaison entre ce microcontrôleur et des organes périphériques de ce dernier qui comprennent au moins un système à sonde de saisie de température, un système de commandes manuelles de fonctionnement et d'affichage, un système d'alimentation électrique de générateur thermique chaud ou froid et un dispositif de mémoire de personnalisation contenant un programme de personnalisation du thermostat, réalisant un choix d'une de ces fonctions de base ou une combinaison de celles-ci ou de leurs parties et précisant des critères de fonctionnement spécifiques propres au thermostat personnalisé dont la fonction de base est une des fonctions de base enregistrées dans les mémoires de ce microcontrôleur.

Pour mieux faire comprendre l'invention on en décrit ci-après un certain nombre d'exemples de réalisation illustrés par des dessins ci-annexés dont

-la figure 1 représente un diagramme de structure d'un thermostat électronique selon l'invention ;

-la figure 2 représente une vue schématique d'une plaque de signalisation et de commandes manuelles du thermostat de la figure 1, personnalisé en thermostat de congélation ;

-la figure 3 représente une vue schématique d'une plaque de signalisation et de commandes manuelles du thermostat de la figure 1, personnalisé en thermostat de réfrigération ;

-la figure 4 représente un graphique des valeurs en température d'enclenchement E, de déclenchement D, et de seuil S du thermostat de la figure 2 montrant les positions des consignes de fonctionnement limite inférieure LI, moyen M et limite supérieure LS ;

-la figure 5 représente une courbe de températures, en fonction du temps, maintenues par le thermostat de la figure 2, lors d'un passage d'une consigne de fonctionnement moyen M à celle de limite inférieure LI ;

-la figure 6 représente un graphique des valeurs en températures d'enclenchement E et de déclenchement D en fonction des consignes choisies, "limite inférieure" (LI), "moyen" (M), "limite supérieure" (LS), du thermostat de la figure 1 personnalisé en thermostat à différentielle constante ;

-la figure 7 représente un graphique des valeurs en températures d'enclenchement E du déclenchement D et de commande de dégivrage G, en fonction des consignes choisies (LI), (M), (LS) du thermostat de la figure 1, personnalisé en thermostat à différentielle constante et à dégivrage automatique ;

-la figure 8 représente une courbe de températures en fonction du temps, maintenues par le thermostat de la figure 7, lors d'un passage d'une consigne "moyen (M) de fonctionnement au dégivrage et d'un retour de dégivrage au fonctionnement selon la consigne" moyen (M) ;

-les figure 9 et 9bis représentent des graphiques des valeurs en températures d'enclenchement E, de déclenchement D et de seuil d'alarme S à écart constant (figure 9) et à valeur constante de température (figure 9bis) en fonction des consignes de fonctionnement "limite inférieure" (LI), "moyen" (M), "limite supérieure" (LS) du thermostat de la figure 4, personnalisé en thermostat à différentielle constante et à seuil d'alarme ;

-la figure 10 représente une courbe de températures en fonction du temps, suivies par le thermostat de la figure 9 ou 9bis, lors d'un passage d'une consigne choisie de fonctionnement à une température accidentellement supérieure à celle d'enclenchement E, d'un passage d'une consigne choisie de fonctionnement à une température accidentellement supérieure au seuil d'alarme, et d'un retour à un fonctionnement normal selon la consigne choisie ;

-la figure 11 représente un graphique des valeurs en températures d'enclenchement E et de déclenchement D en fonction des consignes de fonctionnement "limite inférieure" (LI), moyen (M), limite supérieure (LS) du thermostat de la figure 1, personnalisé en thermostat à enclenchement constant, et

-la figure 12 représente un schéma électrique partiel d'un exemple de réalisation du thermostat de la figure 2.

Un thermostat électronique réalisé selon l'invention et illustré dans les dessins est applicable à une régulation en tout ou rien d'une enceinte chauffée ou enceinte de climatisation, de réfrigération ou de congélation.

Pour faciliter la compréhension de l'invention, les exemples décrits et illustrés correspondent à une application du thermostat à une régulation d'enceinte de réfrigération ou de congélation.

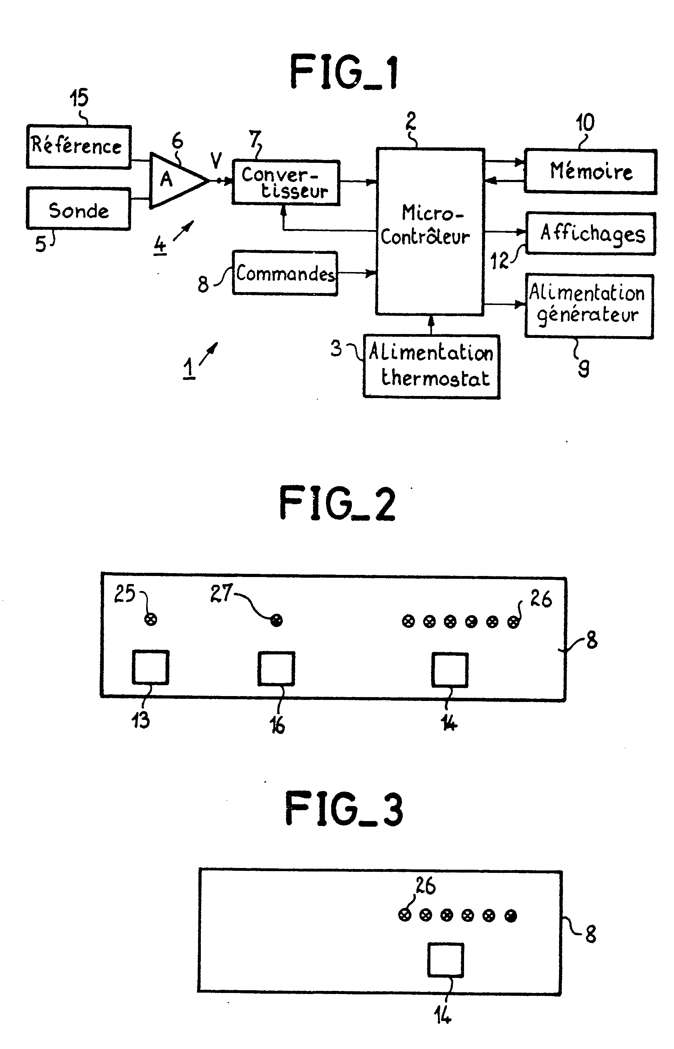

Le thermostat 1 comprend (figure 1) un microcontrôleur 2 ayant comme organes périphériques, un dispositif d'alimentation 3 du thermostat, un système de saisie de température 4 à sonde 5 et à ensemble "comparateur-amplificateur 6 et convertisseur analogique numérique 7" destiné à transformer un signal issu de cette sonde 5 en un signal numérique, un système de commandes manuelles de fonctionnement 8 et d'affichages 12, un dispositif d'alimentation électrique 9 d'un générateur thermique chaud ou froid.

Selon une caractéristique importante, le thermostat électronique 1 comprend un microcontrôleur 2 ayant ses propres mémoires morte et vive contenant un programme d'exécution non pas d'un processus de fonctionnement d'un seul type de thermostat mais des fonctions de bases de plusieurs types de thermostats à caractéristiques de fonctionnement respectivement différentes tels que thermostat à différentielle constante, thermostat à différentielle constante et à alarme à écart constant ou à alarme à valeur constante de température, thermostat à température d'enclenchement constante, thermostat à différentielle constante et à dégivrage automatique cyclique ou semi-automatique, etc., et des fonctions de liaison entre ce microcontrôleur et les organes périphériques de ce dernier.

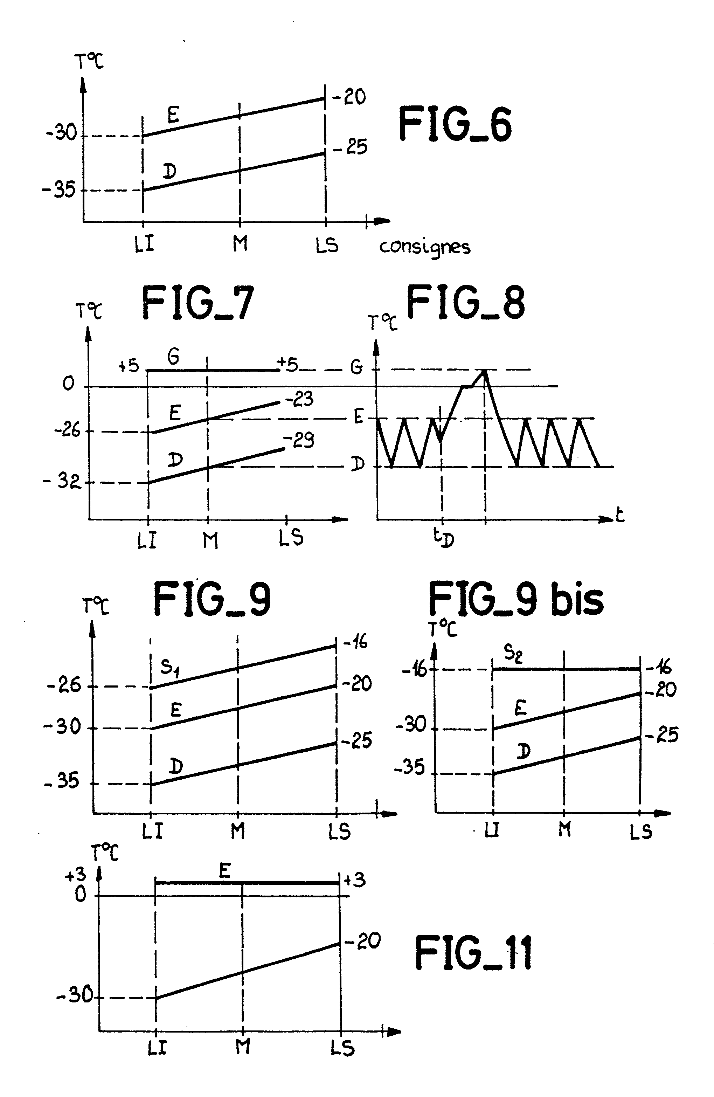

La fonction de base d'un thermostat à différentielle constante est celle d'un thermostat dans lequel l'écart entre la température d'enclenchement E et la température de déclenchement D est constant quelle que soit la consigne de fonctionnement choisie. Dans un exemple représenté à la figure 6, l'écart entre les températures d'enclenchement E et les températures de déclenchement D est égal à une valeur présélectionnée à + 5C et constant quelle que soit la consigne choisie, entre la limite inférieure LI où la valeur d'enclenchement E est présélectionnée à -30° C et celle de déclenchement D à -35° C, et la limite supérieure LS, où la valeur d'enclenchement E est présélectionnée à -20° C et celle de déclenchement D à -25° C.

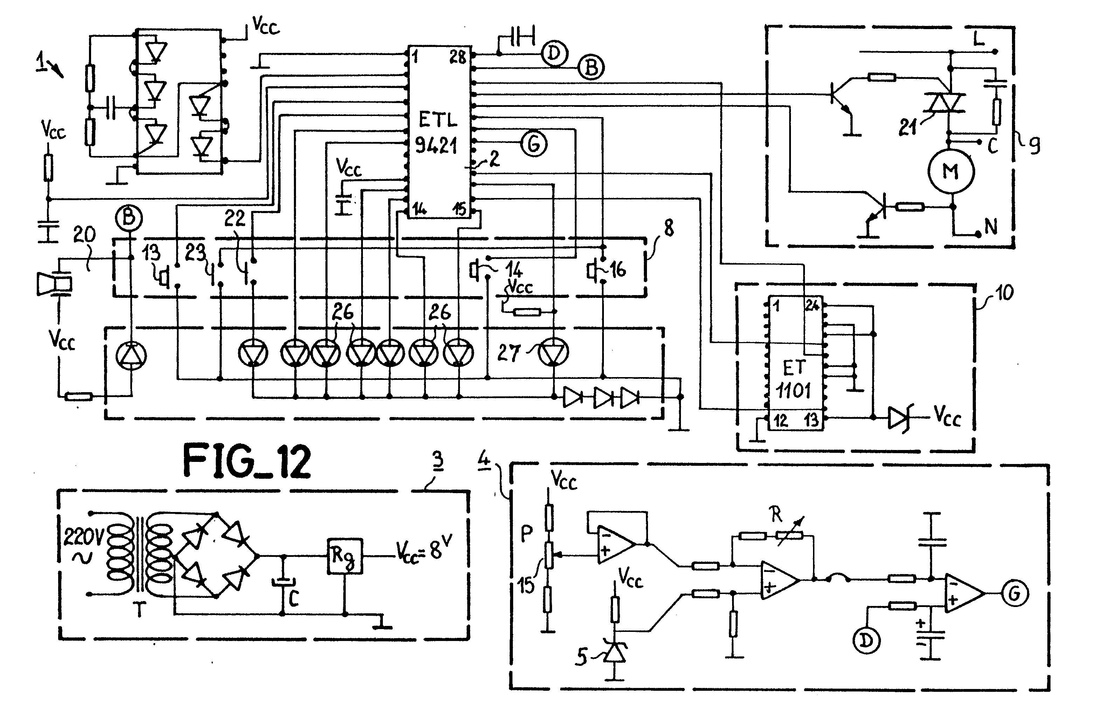

La fonction de base d'un thermostat à différentielle constante et à alarme est celle d'un thermostat à différentielle à laquelle s'ajoute une fonction d'alarme. La valeur S de la température du seuil d'alarme est définie soit par un écart constant entre une valeur S1 et une valeur d'enclenchement E correspondante soit à une valeur S2 constante, quelle que soit la consigne choisie entre les limites extrêmes LI et LS. Dans un exemple représenté aux figures 9 et 10, d'une part l'écart entre les températures d'enclenchement E et les températures de déclenchement D, égal à une valeur présélectionnée de 5° C, et d'autre part l'écart entre les températures de seuil d'alarme S1 et les températures d'enclenchement E, égal à une valeur présélectionnée de 4° C, sont constants quelle que soit la consigne de fonctionnement choisie entre la limite inférieure LI (où E est présélectionnée à -30° C, D à -35° C et S1 à -26° C) et la limite supérieure LS (où E préselectionnée à -20°C, D à -25° C et S1 à -16° C). Dans l'exemple représenté aux figures 9bis et 10, d'une part l'écart entre les températures d'enclenchement E et les températures de déclenchement D, égal à une valeur présélectionnée de 5° C, et d'autre part une valeur de la température d'alarme S2 présélectionnée à -16° C, sont constants quelle que soit la consigne de fonctionnement choisie entre les limites inférieures LI (où E est présélectionnée à -30° C, D à -35° C, S2 à -16° C) et limites supérieures LS (où E est présélectionnée à -20° C, D à -25° C, S2 à -16° C). Selon l'exemple de la figure 10, la température d'une enceinte maintenue par le thermostat de la figure 9 ou 9bis, fonctionnant selon une consigne choisie, oscille entre une valeur d'enclenchement E et une valeur de déclenchement D. Quand cette température dépasse une valeur S1 ou S2 de seuil d'alarme, le thermostat déclenche l'alarme.

La fonction de base d'un thermostat à température d'enclenchement constante est celle d'un thermostat dans lequel, la température d'enclenchement E est constante quelle que soit la consigne de fonctionnement choisie, entre la "limite inférieure" LI, et la "limite supérieure" LS. Dans l'exemple représenté à la figure 11, la température d'enclenchement E est présélectionnée à une valeur constante de +3° C tandis que la température de déclenchement D peut varier entre les valeurs présélectionnées extrêmes de -30° C (en limite inférieure LI) à -20° C (en limite supérieure LS).

La fonction de base d'un thermostat à différentielle constante et à dégivrage automatique cyclique est celle d'un thermostat dans lequel d'une part l'écart entre les températures d'enclenchement E et les températures de déclenchement D, est constant quelle que soit la consigne de fonctionnement choisie, entre la "limite inférieure" LI, "limite supérieure" LS, et d'autre part un dégivrage est enclenché périodiquement après un temps prédéterminé, pour une température de dégivrage préétablie et constante quelle que soit la consigne de fonctionnement choisie. Selon un exemple des figures 7 et 8, l'écart entre les températures d'enclenchement E et les températures de déclenchement D est constant et égal à une valeur présélectionnée de 6° C tandis que la valeur de température de dégivrage est préétablie à une valeur constante de +5° C.

La fonction de base d'un thermostat à différentielle constante et à dégivrage semi-automatique est celle d'un thermostat à différentielle constante, analogue à celui des figures 7 et 8 dans lequel un dégivrage est cependant enclenché manuellement pour une température de dégivrage préétablie et fixe quelle que soit la consigne choisie.

Dans l'exemple de la figure 8, la température d'une enceinte frigorifique maintenue par le thermostat de l'exemple de la figure 7 à dégivrage automatique qui fonctionne normalement selon une consigne choisie, oscille entre une valeur d'enclenchement E et une valeur de déclenchement D, et lors d'un dégivrage au moment tD, monte progressivement à une température de dégivrage G présélectionnée puis revient automatiquement au fonctionnement antérieur à ce dégivrage, et oscille de nouveau entre une valeur de déclenchement D et une valeur d'enclenchement E correspondant à la consigne choisie.

Selon une autre caractéristique, le thermostat électronique 1 comprend un microcontrôleur 2 dont les mémoires contiennent dans son programme d'exécution, parmi les fonctions de base enregistrées de plusieurs thermostats à caractéristiques de fonctionnement différentes, une fonction de choix de la consigne de fonctionnement entre les valeurs extrêmes LI, LS, celle de la valeur de la différentielle (qui est un écart entre les températures d'enclenchement E et de déclenchement D), celle de seuils d'alarme, une fonction de congélation, celle de dégivrage périodique automatique, celle de dégivrage semi-automatique c'est-à-dire un dégivrage déclenché manuellement et terminé automatiquement, celle d'affichage.

Une fonction d'affichage est une fonction de signalisation par exemple des consignes de fonctionnement choisies ou d'un fonctionnement particulier, de l'état d'alarme, d'une température saisie par le système de saisie de température 4, par divers nombres de diodes électroluminescentes à l'état éteint, à l'état allumé fixe ou à l'état de clignotement et/ou par des combinaisons différentes de positions de ces diodes éteintes ou allumées pour représenter des valeurs sous forme de nombres binaires.

Selon une autre caractéristique, le thermostat électronique 1 comprend d'une part, un microcontrôleur 2 pourvu dans le programme d'exécution parmi les fonctions de liaison avec des organes périphériques de ce microcontrôleur, d'une fonction de lecture des informations contenues dans ces organes périphériques et d'autre part comme un organe périphérique de ce microcontrôleur, un dispositif de mémoire associé 10, distinct des mémoires propres de ce microcontrôleur, destiné à recevoir un programme de personnalisation dans lequel sont précisés des caractéristiques, paramètres ou données permettant de personnaliser ce thermostat électronique 1 en un type déterminé de thermostat autrement dit de lui donner des caractéristiques de fonctionnement spécifiques et des données chiffrées propres à un type choisi de thermostat dont la fonction de base est enregistrée dans les mémoires de ce microcontrôleur. Le dispositif de mémoire associé 10 assure ainsi par le programme de personnalisation enregistré, un choix d'une fonction de base correspondante parmi celles enregistrées dans les mémoires du microcontrôleur ou une combinaison particulière de ces fonctions de base ou de leurs parties enregistrées dans ces mémoires du microcontrôleur, et apporte en même temps des critères de fonctionnement afférents à la fonction de base résultant de ce choix ou cette combinaison.

Le dispositif de mémoire de personnalisation 10 est choisi parmi les mémoires sous forme soit de matrice à diodes soit de circuit intégré spécialisé connu communément sous le nom de EE PROM ou UV PROM.

La fabrication des thermostats électroniques selon l'invention devient simple, rapide et économique bien que leurs caractéristiques de fonctionnement respectives soient différentes. En effet, ces thermostats électroniques ont une structure de base identique dans laquelle leurs diverses fonctions de base sont enregistrées dans le microcontrôleur 2. Une personnalisation de ces thermostats avec des caractéristiques ou paramètres ou données chiffrées qui leur sont individuellement propres, dans leur fonctionnement particulier sont enregistrés au cours d'une phase finale de leur fabrication, dans leur dispositif de mémoire de personnalisation 10 ou ajoutés en phase finale de leur fabrication par incorporation, dans leur structure de base, d'un dispositif de mémoire de personnalisation 10 préenregistré.

Les paramètres ou données chiffrées entrant dans une programmation du dispositif de mémoire de personnalisation 10 sont par exemple, la valeur de température d'enclenchement E à la consigne de fonctionnement, "limite inférieure" LI, la valeur de température de déclenchement D à cette même consigne, une valeur de la pente de la courbe de températures d'enclenchement E et celle de températures de déclenchement D, c'est-à-dire la différence entre la valeur de température d'enclenchement E au point de consigne LS et la valeur de température d'enclenchement E au point de consigne LI ou la différence entre la valeur de température de déclenchement D au point de consigne LS et la valeur de température de déclenchement D au point de consigne LI, une valeur de température de dégivrage G, un intervalle de temps entre deux dégivrages, une valeur du seuil d'alarme, des nombres de diodes électroluminescentes qui s'allument ou clignotent dans l'affichage des consignes de fonctionnement choisies LI, LS ou intermédiaires.

Selon une autre caractéristique, le thermostat électronique 1 comprend un microcontrôleur 2 dont les mémoires morte et vive contiennent également dans son programme d'exécution parmi les fonctions de liaison, une fonction de réglage ou d'étalonnage du système de saisie de température 4 à sonde 5 où cette sonde est soumise à deux températures différentes prédéterminées, et dans sa fonction d'affichage, un affichage en nombre binaire par des diodes des électroluminescentes à travers un dispositif de commande d'étalonnage 22 et 23 des valeurs des températures saisies par ce système.

La sonde de température 5 est de préférence soit une jonction PN (diode-transistor) qui, alimentée à courant sensiblement constant, délivre dans le domaine de températures utiles une tension linéairement proportionnelle à la température, soit un capteur connu sous forme d'un circuit intégré où une source de courant, une linéarisation de -40°C à +120°C et un dispositif d'ajustage sont intégrés et qui délivre directement une tension ou signal de l'ordre de 10mV/°C. Ce signal est amplifié et ramené par le "comparateur-amplificateur"6 à des valeurs compatibles avec le convertisseur analogique-numérique 7.

L'étalonnage de la sonde de température 5 et des circuits associés 6 et 7 se réduit à deux opérations identiques pour tous les thermostats 1 fabriqués, à savoir une opération de réglage de zéro pour obtenir par exemple une tension nulle V = 0 à une température de 0°C, et une opération de réglage de gain par exemple pour obtenir une tension de quatre volts V = 4V à une température de -40°C.

Selon l'invention au lieu de mesurer ces tensions V, celles-ci sont affichées en valeur numérique binaire vue par le microcontrôleur 2, par des diodes électroluminescentes, sept diodes à savoir une diode 28 et six diodes 26 qui servent de moyens d'affichage des consignes de fonctionnement "limite inférieure" LI, "moyen" M, "limite supérieure" LS.

Un tel procédé permet de tenir compte d'une éventuelle non linéarité de la conversion analogique-numérique. L'affichage est donc exactement celui de la température vue par le microcontrôleur.

Cet affichage est déclenché dans le système de commandes manuelles 8 par enfoncement des boutons poussoirs à contact fugitif 22 et 23 (figure 12). Dans le thermostat électronique 1 les boutons poussoirs 22 et 23 permettent d'établir une liaison électrique entre ces sept diodes électroluminescentes 26 et 28 et le microcontrôleur 2 lors d'une exécution de la fonction d'étalonnage du système à sonde de saisie de température 4 tandis que le bouton poussoir 14 du système de commandes manuelles 8 de consignes de fonctionnement permet d'établir une liaison électrique entre les six diodes électroluminescentes 26 et le microcontrôleur 2 lors d'une exécution de la fonction de choix de consignes LI, M, LS de fonctionnement du thermostat. Dans une opération de réglage ou d'étalonnage de la sonde de température 5, cette sonde 5 est d'abord mise dans un bain à 0°C, les boutons poussoirs 22 et 23 sont maintenus enfoncés pour initier l'opération d'étalonnage et un potentiomètre de zéro P d'une référence 15 est ajusté pour obtenir toutes les sept diodes électroluminescentes 26 et 28 dans leur état éteint qui représentent zéro et affiche un nombre binaire 0000000 équivalent à zéro en nombre décimal. Cette sonde 5 est ensuite mise dans un bain à - 40°C, les boutons poussoirs 22 et 23 étant toujours maintenus enfoncés pour continuer l'opération d'étalonnage et un potentiomètre ou résistance réglable R de gain du comparateur-amplificateur 6 du système de saisie de température 4 (figure 12) est ajusté pour obtenir cinq diodes 26 dans leur état éteint qui représentent des zéros,une diode 26 et la diode 28 dans leur état allumé fixe qui représentent des "un" pour afficher un nombre binaire 1010000 qui est équivalent à quatre vingt en nombre décimal, chaque unité affichée correspond à 0,5° C ; ainsi quatre vingt fois 0,5° C représentent les 40° C recherchés. Les boutons poussoirs peuvent alors être relachés et le microcontroleur part automatiquement dans sa fonction de régulation de température.

Un thermostat électronique 1 personnalisé en thermostat de congélateur selon un exemple de réalisation illustré dans les figures 2, 4, 5, 12, comprend un tableau de commandes manuelles 8 - (figure 2) ayant un bouton poussoir à contact fugitif 13 pour déclencher et une diode électroluminescente 25 pour signaler ou afficher un état d'alarme, un bouton poussoir à contact fugitif 14 et six diodes électroluminescentes 26 pour respectivement déclencher et afficher les choix de consignes de fonctionnement LI, M, LS du thermostat, et un bouton poussoir à contact fugitif 16 et une diode électroluminescente 27 pour déclencher et afficher un cycle de congélation.

Selon la fonction de choix de consigne de fonctionnement entre les valeurs extrêmes LI et LS du thermostat dans le programme d'exécution du microcontrôleur 2, d'une part à chaque enfoncement du bouton poussoir de consignes 14, une diode parmi les six diodes 26 s'allume et lorsque les six diodes 26 sont toutes allumées, un nouvel enfoncement du bouton poussoir 14 éteint l'ensemble de ces six diodes 26 et ainsi de suite et d'autre part, une consigne LS représentant la température limite supérieure correspond à une diode 26 allumée, une consigne M représentant la température moyenne correspond à trois diodes 26 allumées, une consigne LI représentant la température limite inférieure correspond à six diodes 26 allumées, et la position d'arrêt correspond à six diodes 26 éteintes. Les nombres intermédiaires de diodes allumées représentent les consignes intermédiaires aux consignes LI, M, LS. Dans le thermostat électronique 1 personnalisé en thermostat de congélateur, selon la fonction de congélation dans le programme d'exécution du microcontrôleur 2, un enfoncement d'un bouton poussoir de congélation 16 déclenche un cycle de congélation et maintient une production continue de froid maximal pendant vingt quatre heures. Quand le bouton poussoir de congélation 16 est enfoncé deux fois successives dans un intervalle de vingt quatre heures, le premier enfoncement du bouton 16 correspond à une mise du congélateur en condition de précongélation et le deuxième enfoncement du bouton 16 correspond à un cycle normal de congélation.

Dans le thermostat électronique 1, selon la fonction d'alarme dans le programme d'exécution du microcontrôleur 2 dès qu'une température saisie par la sonde 5 dépasse une température normale d'enclenchement E d'une consigne de fonctionnement du thermostat, une diode d'alarme 25 se met à clignoter avertissant l'utilisateur d'un danger de détérioration des produits conservés. Si la température saisie par la sonde 5 redescend dans la plage normale de températures de fonctionnement correspondantes à la consigne de fonctionnement choisie du thermostat, la diode d'alarme 25 s'éteint automatiquement. Par contre si la température saisie par la sonde 5 continue à croître et atteint une température de seuil d'alarme choisie qui correspond à une température de décongélation, la diode d'alarme 25 reste allumée d'une manière fixe c'est-à-dire sans être en clignotement, même lorsque la température saisie par la sonde 5 redescend dans la plage normale de températures de fonctionnement correspondante à la consigne chosie, afin de rappeler qu'une décongélation s'est produite et que des mesures nécessaires pour des produits entreposés doivent être prises. Un enfoncement du bouton poussoir d'alarme 13 durant un clignotement ou un état éteint de la diode d'alarme 25, ne donne aucun effet. Par contre lorsque la diode d'alarme 25 est allumée d'une manière fixe, un enfoncement du bouton poussoir d'alarme 13 produit soit une interruption de l'allumage de la diode d'alarme 25 annonçant un retour à des températures normales de fonctionnement selon la consigne choisie soit un clignotement de la diode d'alarme 25 indiquant une baisse de température enregistrée qui n'atteint pas encore la plage normale de températures de fonctionnement soit une persistance d'un allumage fixe de la diode d'alarme 25 révélant que la température saisie par la sonde 5 reste au dessus du seuil d'alarme.

Dans des variantes de réalisation la diode électroluminescente d'alarme 25 est doublée - (figure 12) ou remplacée par celle d'un dispositif d'alarme sonore 20.

Un exemple de thermostat électronique 1 personnalisé en thermostat de réfrigérateur comprend un tableau de commandes manuelles 8 illustré dans la figure 3, ayant un bouton poussoir à contact fugitif 14 et six diodes électroluminescentes 26 pour respectivement déclencher et signaler le choix de la consigne de fonctionnement LI, M, LS ou intermédiaire du thermostat.

Selon une autre caractéristique, le thermostat électronique 1 comprend un microcontrôleur 2 dont les mémoires contiennent dans le programme d'exécution parmi les fonctions de bases, une fonction de commande en tout ou rien d'alimentation électrique d'un générateur thermique chaud ou froid par un interrupteur statique tel qu'un triac dont la commutation se fait à courant nul par détection du passage à zéro de la tension alternative aux bornes de ce générateur.

Selon une autre caractéristique, le thermostat électronique 1 comprend un microncontrôleur 2 dont les mémoires contiennent également dans son programme d'exécution parmi les fonctions de base, une fonction de remise en marche du thermostat à un retour de la tension d'alimentation après une coupure de courant, ou à une mise sous tension du thermostat, automatiquement suivant une consigne de fonctionnement moyen M avec un clignotement des diodes électroluminescentes 26 correspondant à cette consigne moyen M, dans la fonction d'affichage, et dans le cas d'un thermostat personnalisé en thermostat le congélateur, automatiquement un cycle de congélation avec un allumage d'une manière fixe ou un clignotement de la diode d'alarme 25 dans la fonction d'alarme selon que la température saisie par la sonde 5 immédiatement à un retour de la tension d'alimentation est supérieure ou inférieure au seuil d'alarme préétabli.

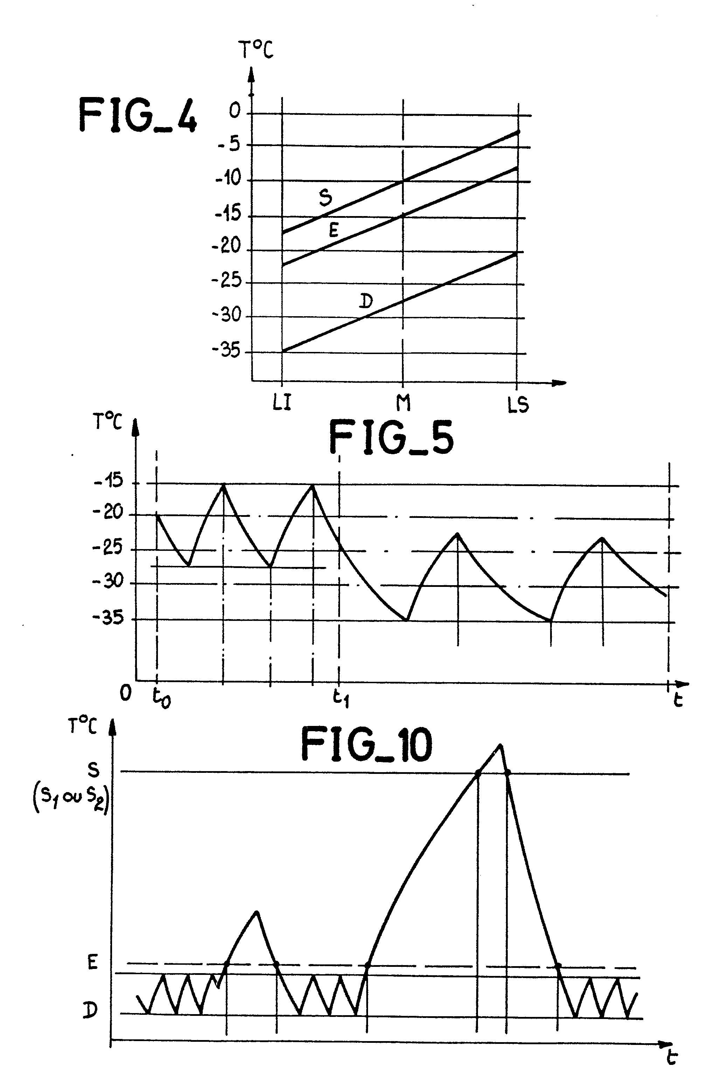

Dans un exemple de réalisation illustré dans un schéma de la figure 12 et des courbes des figures 4 et 5, le thermostat électronique 1 personnalisé en thermostat de congélateur comprend un microncontrôleur 2 constitué par un composant commercialisé par la firme THOMSON SEMICONDUCTEURS sous une désignation ETL 9421, un dispositif de mémoire de personnalisation 10 constitué par un composant commercialisé par la même firme sous une désignation ET 1101, une sonde de température 5 constitué par un capteur commercialisé par la firme ci-dessus sous une désignation TDE 135, un système de commandes manuelles 8 et d'affichage 12 comportant trois boutons poussoirs à contact fugitif et des diodes électroluminescentes correspondantes, à savoir un bouton d'alarme 13, une diode d'alarme 25 et un dispositif d'alarme additionnel sonore 20, un bouton de consignes de fonctionnement 14 et six diodes de consignes 26, un bouton de congélation 16 et une diode de congélation 27, un dispositif de commande d'étalonnage comportant des boutons poussoirs 22 et 23 et une diode 28, un dispositif connu d'alimentation du thermostat en tension continue 3, un système de saisie de température 4 à sonde 5 et à comparateur-amplicateur 6 convertisseur analogique numérique 7. Dans l'exemple des figures 4, 5 et 12, le thermostat électronique 1 personnalisé en thermostat de congélateur assure une alimentation électrique d'un générateur thermique qui est un moto compresseur M de production de froid d'un congélateur non représenté, à travers un dispositif connu d'alimentation 9 comportant un interrupteur statique "triac" 21 dont la commutation se fait à courant nul selon la fonction de commande en tout ou rien d'une alimentation électrique d'un générateur thermique dans le programme d'exécution déjà enregistré dans les mémoires du microcontrôleur 2. Le dispositif d'alimentation électrique 3 du thermostat est un dispositif connu donnant une tension redressée de 8 volts par un pont de Graëtz monté aux bornes d'un secondaire d'un transformateur T et filtrée par une capacité C et régulé par un régulateur Rg.

Une tension alternative qui alimente le moto compresseur M et le transformateur T du dispositif d'alimentation électrique 3, est par exemple une tension de 220 volts.

Dans la mémoire du microcontrôleur 2 est enregistré un programme d'exécution des fonctions de base, rappelées plus haut, de plusieurs types choisis de thermostats et des fonctions de liaison avec des organes périphériques de ce microcontrôleur 2 tels que le système à sonde de saisie de température 4, le dispositif de mémoire de personnalisation 10, le système de commandes manuelles 8 et d'affichages 12 et le dispositif d'alimentation électrique 9 du motocompresseur M, et dans le dispositif de mémoire de personnalisation est enregistré un programme de personnalisation comportant des caractéristiques et des données chiffrées choisies du thermostat personnalisé telles qu'une différentielle constante de 12,5°C (figure 4), une consigne de fonctionnement à température de déclenchement D de limite inférieure LI à -35°C, et soit une consigne de fonctionnement à température de déclenchement D de limite supérieure LS à -20°C, soit une valeur de pente de 15° C entre les valeurs extrêmes de déclenchement, un écart constant de seuils d'alarme S de 5°C vis-à-vis des températures d'enclenchement E autrement dit un seuil d'alarme S à -17,5°C à la consigne de limite inférieure LI, à -2,5°C à la consigne de limite supérieure LS et à -10°C à la consigne moyenne M.

Lors d'une mise sous tension du congélateur muni du thermostat électronique de la figure 12, trois diodes de consigne 26 clignotent et indiquent que la consigne de fonctionnement est amenée automatiquement à la position de consigne moyen M, la diode de congélation 27 est allumée, indiquant que l'alimentation du motocompresseur est maintenue sans interruption pour une période de vingt quatre heures et la diode l'alarme 25 est allumée d'une manière fixe si la température à l'intérieur du congélateur a été supérieure à -10°C. Quand le bouton poussoir d'alarme 13 est enfoncé, trois cas suivants peuvent se présenter. Dans un premier cas, la diode d'alarme 25 est éteinte, cela signifie que la température à l'intérieur de ce congélateur redescend dans la zone normale de températures de fonctionnement à la consigne moyen M du congélateur autrement dit elle est située entre la température d'enclenchement E de -15°C et la température de déclenchement D de -27,5°C de la consigne de fonctionnement moyen M. Si la période de vingt quatre heures de congélation est terminée, le thermostat électronique enclenche alors à -15°C l'alimentation du motocompresseur M jusqu'à ce que la température atteigne -27,5°C où il déclenche un arrêt de ce motocompresseur M et recommence à enclencher l'alimentation de ce motocompresseur M dès que la température à l'intérieur de ce congélateur atteint -15°C et ainsi de suite (figure 5). Si l'on enfonce ensuite trois fois consécutives le bouton de consigne 14, toutes les diodes de consignes 26 sont allumées et indiquent que la consigne de fonctionnement est mise en position LI ou limite inférieure à la température d'enclenchement E à -22,5°C et à température de déclenchement D à -35°C. Le motocompresseur M est alors alimenté par le thermostat électronique lorsque la température est remontée à -22,5° C et arrêté lorsqu'elle atteint -35° C. Dans une courbe de températures dans ce congélateur, représentée à la figure 5, sont illustrées une variation de ces températures selon une consigne de fonctionnement moyen M du thermostat entre les temps $t_0$ et $t_1$, des variations de ces températures respectives lors d'un passage au temps $t_1$ de la consigne de fonctionnement M en consigne de fonctionnement LI et un fonctionnement du thermostat à la consigne LI à partir de ce temps $t_1$.

Dans un deuxième cas, la diode d'alarme 25 clignote, elle signifie que la température à l'intérieur du congélateur a commencé à descendre au-dessous du seuil d'alarme S autrement dit cette température est encore située entre -10°C et -15°C pour la consigne M. Quand cette température descend au-dessous de la température d'enclenchement E -15°C du thermostat pour cette consigne de fonctionnement M, la diode d'alarme 25 s'éteint d'elle-même et le thermostat fonctionne selon cette consigne M.

Dans un troisième cas où la diode d'alarme 25 reste allumée d'une manière fixe, la température du congélateur est toujours au-dessus du seuil d'alarme S qui est égal à -10°C pour la consigne de fonctionnement M de ce thermostat électronique.

A tout moment une action sur le bouton poussoir 16 enclenche l'alimentation du motocompresseur M pour une durée de vingt quatre heures, ce qui permet à l'ensemble frigorifique de maintenir les conditions de température et de durée satisfaisantes pour une congélation des denrées.

Dans un exemple de thermostat électronique 1 personnalisé en thermostat de réfrigateur avec fonction de dégivrage automatique selon l'exemple des figures 7 et 8, le programme de personnalisation de la mémoire 10 contient des données telles qu'une différentielle constante de 6° C (figure 7), une température de déclenchement D à la limite inférieure des consignes LI de -32° C et une pente entre cette valeur et la valeur de température de déclenchement à la limite supérieure LS -29°C des consignes, de 4° C, une température de dégivrage G de +5° C, une valeur 60 représentant le nombre d'heures entre deux dégivrages automatiques successifs, un nombre 3 représentant le nombre de diodes allumées à la mise sous tension (ou un retour de celle-ci après une coupure de courant).

Lors d'une mise sous tension du réfrigérateur équipé de ce thermostat ainsi programmé, trois diodes de consigne 26 clignotent et indiquant un fonctionnement en position de consigne moyenne M : un enclenchement à la température de -24,5° C et un déclenchement à la température de -30,5° C. Au bout de 60 heures de fonctionnement, le motocompresseur M est automatiquement arrêté jusqu'à ce que la température remonte à la valeur de dégivrage G de +5° C. Le motocompresseur M est alors remis en route par le thermostat électronique selon les valeurs d'enclenchement et de déclenchement correspondant à la consigne choisie au préalable.

Les thermostats électroniques ainsi réalisés sont simples et rapides à fabriquer par conséquent économiques sans compromettre la fiabilité de leur fonctionnement. Ils sont également simples à utiliser.

## Revendications

1. Thermostat électronique, caractérisé en ce qu'il comprend un microcontrôleur (2) ayant ses propres mémoires morte et vive contenant un programme d'exécution des fonctions de base de plusieurs types de thermostats à caractéristiques de fonctionnement différentes et des fonctions de liaison entre ce microcontrôleur (2) et des organes périphériques de ce dernier qui comprennent au moins un système à sonde de saisie de température (4), un système de commandes manuelles de fonctionnement (8) et d'affichage (12), un système d'alimentation électrique (9) de générateur thermique chaud ou froid et un dispositif de mémoire de personnalisation (10) contenant un programme de personnalisation du thermostat, réalisant un choix d'une de ces fonctions de base ou une combinaison de celles-ci ou de leurs parties et précisant des critères de fonctionnement spécifiques propres au thermostat personnalisé dont la fonction de base est une des fonctions de base enregistrées dans les mémoires de ce microcontrôleur (2).

2. Thermostat selon la revendication 1, caractérisé en ce que le microcontrôleur (2) est pourvu dans son programme d'exécution, parmi les fonctions de liaison avec des organes périphériques de ce microcontrôleur, d'une fonction de lecture des informations contenues dans le dispositif de mémoire de personnalisation (10).

3. Thermostat selon selon l'une des revendications 1 et 2, caractérisé en ce que le microcontrôleur (2) est pourvu dans son programme d'exécution, parmi les fonctions de base de thermostats, d'une fonction de choix de la consigne de fonctionnement, d'une fonction de congélation, d'une fonction de dégivrage périodique automatique, de celle de dégivrage semi-automatique, de celle d'affichage et d'une fonction d'alarme.

4. Thermostat selon l'une des revendications 1 à 3, caractérisé en ce que le microcontrôleur (2) est pourvu dans son programme d'exécution, parmi les fonctions de base, d'une fonction de remise en marche du thermostat, à un retour de la tension électrique d'alimentation après une coupure de courant ou à une mise sous tension, automatiquement en consigne moyen M de fonctionnement quelle que soit la consigne choisie avant cette coupure de courant, et en cycle de congélation dans le cas d'un thermostat personnalisé en thermostat de congélateur.

5. Thermostat selon l'une des revendications 1 à 4, caractérisé en ce que le microcontrôleur (2) est pourvu dans son programme d'exécution, parmi les fonctions de liaison, d'une fonction d'étalonnage du système de saisie de température (4) à sonde - (5) où cette sonde (5) est soumise à deux températures différentes prédéterminées, et dans sa fonction d'affichages d'un affichage des valeurs de températures saisies par ce système.

6. Thermostat selon la revendication 5, caractérisé en ce que le microcontrôleur (2) est pourvu dans la fonction d'affichage de son programmme d'exécution, d'un affichage en nombre binaire par des diodes électroluminescentes (26) allumées et éteintes, des valeurs de température saisie par le système à sonde de saisie de température (4).

7. Thermostat selon l'une des revendications 3 et 4, caractérisé en ce que le microcontrôleur (2) est pouvu dans la fonction d'affichage de son programme d'exécution, d'un affichage des consignes de fonctionnement par des nombres différents de diodes électroluminescentes (26) allumées d'une manière fixe, et d'un affichage clignotant, à un retour de la tension d'alimentation après une coupure de courant, par un nombre de diodes électroluminescentes correspondant à une consigne prédéterminée dans la mémoire de personnalisation (10).

8. Thermostat selon la revendication 3, caractérisé en ce que le microcontrôleur (2) est pourvu dans le programme d'affichage de son programme d'exécution, d'un affichage d'alarme par une diode électroluminescente (25) à l'état allumé fixe jusqu'à un actionnement sur un bouton d'alarme (13) quand la température saisie par le système de saisie de température (4) est au-dessus du seuil d'alarme, à l'état de clignotement quand la température saisie par le système est située entre le seuil d'alarme et les températures d'enclenchement E du thermostat, et à l'état éteint quand la température saisie par ce système se trouve en dessous des températures d'enclenchement E de ce thermostat.

9. Thermostat selon l'une des revendications 1 à 8, caractérisé en ce qu'il comprend comme un organe périphérique du microcontrôleur, un système de commandes manuelles de fonctionnement (8) et d'affichage (12) pourvu de boutons poussoirs à contact fugitif (13, 14, 16, 23) destinés à établir respectivement une liaison électrique entre le microcontrôleur (2) et les diodes électroluminescentes (25, 26, 27, 28) d'alarme, de consignes de fonctionnement, de congélateur, d'étalonnage.

10. Thermostat selon l'une des revendications 1 à 9, caractérisé en ce que le microcontrôleur (2) est pourvu dans son programme d'exécution parmi les fonctions de base, d'une fonction de commande en tout ou rien d'alimentation électrique d'un générateur thermique chaud ou froid tel qu'un motocompresseur (M) d'un circuit frigorifique, par un interrupteur statique par exemple un triac (21) dont la commutation se fait à courant nul par détection du passage à zéro de la tension alternative aux bornes de ce générateur.

11. Thermostat selon la revendication 1, caractérisé en ce que le dispositif de mémoire de personnalisation (10) est constitué par un dispositif choisi parmi les mémoires sous forme soit de matrice à diodes soit de circuit intégré spécialisé programmable connu sous une désignation EE PROM ou UV PROM.

FIG_1

15
Référence
6
A
V
7
Conver-
tisseur
2
Micro-
Contrôleur
10
Mémoire
Sonde
5
4
Affichages
12
8
Commandes
Alimentation
générateur
9
3
Alimentation
thermostat
1

FIG_2

25
27
26
8
13
16
14

FIG_3

26
8
14

FIG_4
T°C
0
-5
-10
-15
-20
-25
-30
-35
S
E
D
LI
M
LS
FIG_5
T°C
-15
-20
-25
-30
-35
0
$t_0$
$t_1$
t
FIG_10
T°C
S
($S_1$ ou $S_2$)
E
D
t

T°C
-20
E
-30
-25
D
-35
LI
M
LS
consignes
FIG_6
FIG_7
T°C
+5
G
+5
0
E
-23
-26
D
-29
- 32
LI
M
LS
FIG_8
T°C
G
E
D
t
$t_D$
FIG_9
T°C
-16
$S_1$
-26
-20
E
-30
-25
D
-35
LI
M
LS
FIG_9 bis
T°C
$S_2$
-16
-16
-20
E
-30
-25
D
-35
LI
M
LS
T°C
+3
E
+3
0
-20
-30
LI
M
LS
FIG_11

1
Vcc
ETL
9421
1
28
14
15
2
D
B
G
L
21
C
g
M
N
20
13
23
22
8
14
16
26
26
27
10
ET
1101
24
12
13
FIG_12
3
220V
~
T
C
Rg
Vcc=8V
4
P
15
R
5
D
G

Office européen des brevets

# RAPPORT DE RECHERCHE EUROPEENNE

Numero de la demande

EP 86 40 2509

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl.4) |
|---|---|---|---|
| Y | EP-A-0 119 580 (CEPEM) * Résumé; page 2, lignes 1-22; page 3, lignes 4-6; page 4, lignes 20-33; page 5, lignes 5-18; page 5, ligne 24 - page 6, ligne 8; revendications 1-3,9; figure * | 1-3 | G 05 D 23/19<br>G 05 D 23/20<br>G 05 D 23/24 |
| A | | 6,10, 11 | |
| | --- | | |
| Y | FR-A-2 533 678 (THOMSON-CSF) * Résumé; page 2, ligne 13 - page 3, ligne 4; page 3, ligne 31 - page 5, ligne 8; page 6, ligne 14 - page 8, ligne 25; revendications 1-3,5-7,10,12-15; figures 1-4 * | 1-3 | |
| | | | DOMAINES TECHNIQUES RECHERCHES (Int. Cl.4) |
| A | | 6,8-10 | G 05 D |
| | --- | | |
| A | FR-A-2 489 017 (WEBASTO-WERK) * Page 1, ligne 26 - page 2, ligne 23; page 4, lignes 7-22; page 6, lignes 34-40; revendications 1-6; figures 1-3 * | 1-3,8, 11 | |
| | --- -/- | | |

Le present rapport de recherche a été établi pour toutes les revendications

| Lieu de la recherche | Date d'achèvement de la recherche | Examinateur |
|---|---|---|
| LA HAYE | 15-02-1987 | FOURRICHON,P.M.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l invention
E : document de brevet antérieur, mais publié a la date de dépôt ou après cette date
D : cité dans la demande
L : cité pour d'autres raisons
& : membre de la même famille, document correspondant

OEB Form 1503 03 82

Office européen des brevets

# RAPPORT DE RECHERCHE EUROPEENNE

Numero de la demande

EP 86 40 2509



## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 116 486 (D.B. SOUSSAN)<br>* Résumé; page 3, ligne 4 - page 4, ligne 5; page 5, lignes 23-26; page 6, lignes 2-8; page 8, ligne 21 - page 9, ligne 31; revendications 1,2,10,14-16 *<br>----- | 1,3,4, 6,8-10 | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 15-02-1987 | FOURRICHON, P.M.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& membre de la même famille, document correspondant

OEB Form 1503 03 82